# EUROPEAN PATENT APPLICATION

(11) **EP 4 265 318 A1**
(43) Date of publication of application: **25.10.2023**
(21) Application number: 23168248.5
(22) Date of filing: 17.04.2023
(51) Int. Cl.: B01D 53/14

(54) **ABSORPTION MEDIUM AND METHOD FOR CARBON DIOXIDE ABSORPTION FROM FLUE GAS**

(30) Priority: 19.04.2022 NL 2031615
(71) Applicant: Host Holding B.V., 7521 PS Enschede (NL)
(72) Inventor: KLEIN TEESELINK, Hermanus, 5200 BN Enschede (NL); BROUWER, Thomas, 5200 BN Enschede (NL)
(74) Representative: Patentwerk B.V.

(57) **Abstract**

The invention relates to an absorption medium for the absorption of carbon dioxide from flue gas, wherein said adsorption medium is an amine based absorption medium. The invention also relates to a method and system making use of such absorption medium.

## Description

The invention relates to an absorption medium for the absorption of carbon dioxide (CO₂) from flue gas. The invention also relates to a method for absorbing CO₂ from flue gas using at least one absorption medium according to the present invention. The invention further relates to a system for CO₂ and flue gas separation.

Biomass-derived gas, such as flue gas, is the gas that emanates from combustion plants and which may contain the reaction products of (bio)fuel and air and residual substances such as particulate matter and oxides. Applying gas cleaning technologies for cleaning such flue gasses is desired in order to reduce harmful emission. Flue gas cleaning technologies are typically configured to minimize nitrogen, sulphur, chlorine, dust and other pollutants to meet required emission standards anywhere. Flue gas is typically cleaned in stages, wherein for different types of filters and/or strippers can be applied. The applied flue gas cleaning technique is strongly dependent on the type of flue gas to be cleaned and also on local emission regulations. The emission requirements often determine the type of filtering system which is to be applied. The removal of CO₂ from flue gas can for example be effectively done via an absorption process. An absorption medium is used for the absorption of CO₂ from flue gas. The absorption medium is typically an amine- or glycol-based absorption medium as these media are known to be selective towards sour gasses, such as CO₂ and hydrogen sulfide (H₂S), and have a rather good capacity to aforementioned sour gasses. An example of an absorption medium according to the prior art is an aqueous absorption medium comprising monoethanolamine (MEA). A drawback of the use of MEA is relatively low capacity, high degree of oxidative and/or thermal degradation and relatively high energy consumption.

It is a goal of the present invention to provide an improved absorption medium for the absorption of CO₂ from flue gas or at least to provide an alternative to the known solutions.

The invention provides thereto an absorption medium for the absorption of carbon dioxide (CO₂) from flue gas, said adsorption medium comprising at least one amine, preferably 2-amino-2-methyl-1-propanol (AMP), and a fraction of at least one salt, in particular at least one halogen containing salt.

It was surprisingly found that the use of an absorption medium comprising 2-amino-2-methyl-1-propanol (AMP) and a fraction of at least one salt, in particular at least one halogen containing salt has several benefits over the known amine-based absorption mediums. It was found that an absorption medium comprising AMP and a fraction of at least one salt, in particular at least one halogen containing salt reduces or even partially prevents oxidative degradation. It was further found that the absorption medium according to the present invention benefits of a relatively low amine degradation resulting in a more durable product and method for the absorption of carbon dioxide from flue gas. Less amine degradation means that less absorbent medium needs to be added during the process. A further benefit is a reduced nitrogen emission. It was experimentally found that an adsorption medium according to the present invention can be applied for the absorption of carbon dioxide from highly oxidative components present in flue gases.

AMP benefits of being sterically hindered amine which has several consequences. The carbamate ion from AMP is relatively unstable and will hydrolyse relatively fast with water to bicarbonate instead of being in equilibrium with a carbamic acid. As thermal amine degradation emanated from the carbamic acid, the bicarbonate formation inherently improves the amine stability. Also the formation of bicarbonate releases the CO₂ from the AMP. As a result, the amine is available again for CO₂ capture and enabling a lower CO₂ absorption heat because the CO₂ containing ions formed are less stable than the carbamate ions of the other amines. This means that AMP can not only be regenerated much more effectively at lower temperatures compared to conventional amines, but also has more CO₂ capacity to capture CO₂ with the same amount of amine liquid. Further, the use a fraction of at least one salt enables the neutralisation of radicals that are responsible for oxidative degradation of the amines. In particular the halogen ions are found to be effective in the neutralisation of these radicals. Additionally, a benefit of the absorption medium according to the present invention is that the absorption medium can operate at relatively low temperatures, in particular below 100 degrees Celsius, more in particular below 90 degrees Celsius. The ability to use lower temperatures is beneficial in order to reduce thermal degradation but it also beneficial as it enables the use of the residual heat for the heating process during absorption and/or desorption. This is beneficial for the overall (thermal and economical) efficiency of the process. The use of lower temperatures is also beneficial for the reduction of oxidative and/or thermal degradation. The reduced oxidative degradation by using an absorption medium according to the present invention can also be at least partially explained by the oxidative nature of the present halogen salt(s) which protects the amine from oxidative degradation and by oxidizing itself. Hence, the halide ions captures the oxidative radicals. It is expected that the oxidized halogen salt is continuously regenerated (i.e. reduced) so that halogen salt(s) is/are not consumed during the process.

Oxidative degradation generally produces carboxylic acids and ammonia. These carboxylic acids are responsible for corrosion and pollution, but also for accelerating the amine degradation because carboxylic acids can react with amines to heat stable salts (HSS). That an absorption medium comprising AMP is less sensitive to oxidative and/or thermal degradation can at least partially be explained because in particular the bicarbonate ions will be present and not the relatively unstable carbamate ions. This also has the consequence that AMP has a relatively low, or even absent, self-catalysing degradation character because the oxidative and thermal degradation reinforce each other.

Typically, monoethanolamine (MEA) is used as absorption medium for the absorption of CO₂ from flue gas. However, MEA has the drawback that this amine greatly suffers of self-catalysing amine degradation. The relatively high temperatures, in the range of 120 to 140 degrees Celsius, needed for the regeneration of MEA are undesirable in from energetic point of view. The use of an absorption medium according to the present invention has several benefits over the use of MEA.

When it is referred to flue gas, a gas mixture comprising at least a fraction of CO₂ is meant. The flue gas, or gas mixture, comprises carbon dioxide, and could for example comprise combustion exhaust gases, exhaust gases from biological processes such as composting processes, exhaust gases from calcination processes and/or residual gases from biological and/or chemical processes. Flue gas can also be a biomass-derived gas. The flue gas applied typically comprises from 1 to 40% by volume of CO₂, in particular from 2 to 20% by volume. It is for example conceivable that the flue gas comprises in the range of 8 to 18% carbon dioxide by volume. The flue gas may be bio-based flue gas. The flue gas could for example originate from a biomass-fired plant.

The at least one salt is preferably a halogen containing salt. Hence, at least one salt is preferably a halogen anion in combination with at least one cation. The use of at least one halogen containing salt was found to be beneficial to prevent reduction of the alkalinity of the amine. It is beneficial if the absorption medium comprises at least 0.5 wt% of at least one halogen containing salt. It is also conceivable that the absorption medium comprises at least 1 wt% of at least one halogen containing salt. It is also possible that the absorption medium comprises at most 2.5 wt%, and in particular at most 3 wt% of at least one halogen containing salt. It was experimentally found that the effect of the halogen containing salt did not notably further increase when using higher amounts. In a preferred embodiment, the absorption medium comprises in the range of 0.8 to 2.3 wt% of at least one halogen containing salt, in particular in the range of 1 to 2 wt% of at least one halogen containing salt.

In a possible embodiment, at least one anion of the applied salt is monovalent. In a preferred embodiment of the absorption medium according to the present invention, at least one halogen containing salt comprises fluorine (F⁻), chlorine (Cl⁻), bromine (Br⁻), iodine (I⁻) and/or astatine (At⁻). It is also conceivable that at least one halogen containing salt comprising a combination of said halogens. In particular iodine is beneficial as it benefits of being relatively heavy and stable and widely available. At least one of the listed anions is typically applied in combination with a cation. Nonlimiting examples thereof are sodium (Na+), potassium (K+), magnesium (Mg²⁺), calcium (Ca²⁺), ammonium (NH₄⁺) and/or iron (Fe²⁺, Fe³⁺). Hence, it is conceivable that at least one halogen containing salt comprises sodium (Na⁺), potassium (K+), magnesium (Mg²⁺), calcium (Ca²⁺), ammonium (NH₄⁺) and/or iron (Fe²⁺, Fe³⁺). A nonlimiting example of an embodiment which was found to be of particular interest is an absorption medium comprising a fraction of potassium iodide (KI). Potassium iodide was found be a good in combination with an amine for the present application, where it was experimentally found that the potassium iodide has a positive effect on at least the reduction and/or partially prevention of oxidative degradation.

When it is referred to an absorption medium also an absorber can be meant. The absorption mediums can also be referred to as amine-based absorption medium. The absorption medium according to the present invention is in particular substantially liquid. Hence, the absorption medium can be a liquid absorption medium.

Whereas AMP is a preferred amine within the context of the invention, it is also conceivable that another amine is applied in combination with a salt for CO₂ absorption from flue gas. At least one amine could for example chosen from the group of: Monoethanlamine (MEA), Piperazine (PZ), Methyldiethanolamine (MDEA), Diethanolamine (DEA) and/or Triethanolamine (TEA)

Alternatively, the invention relates to an absorption medium for the absorption of CO₂ from flue gas, said adsorption medium comprising an amine comprising the structure: 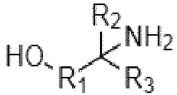 and comprising a fraction of at least one salt, in particular at least one halogen containing salt. It is for example conceivable that R₁ = CH₂ and/or R₂ = CH₃ and/or R₃ = CH₃. However, further alternatives for R₁, R₂ and R₃ are conceivable. R₂ and R₃ preferably always comprise at least one carbon atom in order to protect the amine. The amine structure can be applied in combination with any of the described embodiments as described for AMP.

Yet in another alternative embodiment, the invention relates to an absorption medium for the absorption of CO₂ from flue gas, said adsorption medium comprising an amine comprising the structure: 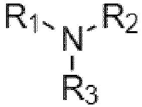 and comprising a fraction of at least one salt, in particular at least one halogen containing salt. The amines can be primary amines (R1 and R2 = H), secondary amines (R1 = H), or tertiary amines (R1, R2 and R3 ≠ H).

The invention also relates to a method for absorbing CO₂ from a flue gas using at least one absorption medium according to the present invention. Hence, the invention relates to a method for absorption medium for the absorption of CO₂ from flue gas, said adsorption medium comprising 2-amino-2-methyl-1-propanol (AMP) and a fraction of at least one salt, in particular at least one halogen containing salt.

The method according to present invention has similar advantages as described for the applied absorption medium according to the present invention. The method benefits of being efficient in terms of thermal and economical efficiency, in particular due to the reduced thermal and oxidative degradation of the applied absorption medium. The method according to the invention could typically be applied using any flue gas or gas mixture which comprises CO₂, in particular combustion exhaust gases, exhaust gases from biological processes such as composting processes, exhaust gases from calcination processes and/or residual gases from biological and/or chemical processes. The flue gas typically comprises from 1 to 40% by volume of CO₂, in particular from 2 to 20% by volume of CO₂.

Typically, the method according to the present invention includes that the CO₂ absorbed by the absorption medium is desorbed by increasing the temperature and/or by decreasing the absolute pressure. This step enables that the absorption medium can be reused in an efficient manner. Hence, the absorption medium can be reused for the absorption of CO₂ after the subsequent desorption of carbon dioxide.

The absorption is preferably carried out at a temperature in the range from 20 to 50 degrees Celsius, in particular in the range from 30 to 40 degrees Celsius. In case the method includes a desorption step, the desorption is preferably carried out at a temperature below 110 degrees Celsius, in particular below 100 degrees Celsius, more in particular below 95 degrees Celsius, and even more in particular below 90 degrees Celsius. The use of such relatively low temperatures is enables by the use of the absorption medium according to the present invention. The required temperatures are sufficiently low to enable the use of the residual heat from a secondary process for the heating process during the desorption. It is for example also conceivable that the desorption is carried out at a temperature in the range from 80 to 95 degrees Celsius, in particular in the range from 85 to 90 degrees Celsius.

An additional benefit of the use of relatively low temperatures, in particular below 100 degrees Celsius, is that (fiber reinforced) plastic containers and/or piping and/or ducting can also be used besides metal containers and/or piping and/or ducting.

The desorption could optionally be carried out at a pressure below 1 bara. It is for example conceivable that the desorption is carried out at a pressure in the range of 0.1 to 0.8 bara, in the range of 0.4 to 0.5 bara or in the range of 0.6 to 0.7 bara. The desorption could for example be carried out under vacuum. The use of a relatively low pressure also enables the use of lower operating temperatures. The absorption is typically carried out at ambient pressure. However, it is also conceivable that the absorption is carried out at a pressure below or above 1 bara.

The flue gas to be cleaned could optionally be cooled prior to the absorption, for example to a temperature below 40 degrees Celsius. This could be done in order to improve the absorption process.

The invention further relates to a system for CO₂ and flue gas separation, comprising at least one absorption column and at least one stripper column comprising at least one absorption medium according to the present invention. The invention in particular relates to a system for CO₂ and flue gas separation, comprising
- an absorber column, comprising:
   ∘ at least one gas inlet for providing flue gas, in particular CO₂-rich flue gas, into said absorber column,
   ∘ at least one absorption medium inlet for providing at least one CO₂-lean absorption medium in particular according to the present invention,
   ∘ at least one gas outlet for discharging CO₂-lean flue gas from the absorber column, and
   ∘ at least one absorption medium outlet for discharging absorption medium, in particular CO₂-rich absorption medium, and
- a stripper column, comprising:
   ∘ at least one absorption medium inlet for providing at least one absorption medium, in particular CO₂-rich absorption medium, into said stripper column,
   ∘ optionally at least one gas inlet for providing a carrier gas configured for the removal of CO2;
   ∘ at least one gas outlet for discharging CO₂ from the stripper column, and
   ∘ at least one absorption medium outlet for discharging absorption medium, in particular CO₂-lean absorption medium;
   ∘ optionally at least one absorption medium outlet for heat exchange with a reboiler system;
   ∘ optionally at least one absorption medium return inlet from the heat exchange with a reboiler system;
wherein the system is configured such that at least part, and preferably all, of the absorption medium recovered in the stripper column is supplied to the absorption medium inlet of the absorber column.

Hence, the absorption medium outlet of the absorber column is typically connected to the absorption medium inlet of the stripper column, whilst the absorption medium outlet of the stripper column is typically connected to the absorption medium inlet of the absorber column. At least one heat exchanger can be applied between the interconnected streams in order to further improve the thermal efficiency of the system.

It will be clear that the invention is not limited to the exemplary embodiments which are described here, but that countless variants are possible within the framework of the attached claims, which will be obvious to the person skilled in the art. In this case, it is conceivable for different inventive concepts and/or technical measures of the above-described variant embodiments to be completely or partly combined without departing from the inventive idea described in the attached claims.

The verb 'comprise' and its conjugations as used in this patent document are understood to mean not only 'comprise', but to also include the expressions 'contain', 'substantially contain', 'formed by' and conjugations thereof.

## Claims

1. Absorption medium for the absorption of carbon dioxide (CO₂) from flue gas, said adsorption medium comprising 2-amino-2-methyl-1-propanol (AMP) and a fraction of at least one halogen containing salt.

2. Absorption medium according to claim 1, comprising at least 0.5 wt% of at least one halogen containing salt.

3. Absorption medium according to claim 1 or claim 2, comprising at most 3 wt% of at least one halogen containing salt.

4. Absorption medium according to any of the previous claims, comprising in the range of 1 to 2 wt% of at least one halogen containing salt.

5. Absorption medium according to any of the previous claims, wherein at least one halogen containing salt comprises fluorine, chlorine, bromine, iodine and/or astatine.

6. Absorption medium according to any of the previous claims, wherein at least one halogen containing salt comprises sodium, potassium, magnesium, calcium, ammonium and/or iron.

7. Absorption medium according to any of the previous claims, comprising a fraction of potassium iodide (KI).

8. Absorption medium according to any of the previous claims, wherein the absorption medium is substantially liquid.

9. Method for absorbing CO₂ from a flue gas using at least one absorption medium according to any of the previous claims.

10. Method according to claim 9, wherein the CO₂ absorbed by the absorption medium is desorbed by increasing the temperature and/or by decreasing the pressure.

11. Method according to claim 9 or claim 10, wherein the absorption is carried out at a temperature in the range from 20 to 50 degrees Celsius, in particular in the range from 30 to 40 degrees Celsius.

12. Method according to claim 10 or claim 11, wherein the desorption is carried out at a temperature below 100 degrees Celsius, in particular below 95 degrees Celsius, more in particular below 90 degrees Celsius.

13. Method according to any of claims 10 to 12, wherein the desorption is carried out at a temperature in the range from 80 to 95 degrees Celsius, in particular in the range from 85 to 90 degrees Celsius.

14. Method according to any of claims 10 to 13, wherein the desorption is carried out at a pressure below 1 bar, in particular at a pressure in the range of 0.5 to 0.8 bar, more in particular in the range of 0.6 to 0.7 bar.

15. System for CO₂ and flue gas separation, comprising at least one absorption column and at least one stripper column comprising at least one absorption medium according to any of claims 1 to 8.
